# EUROPEAN PATENT APPLICATION

(11) **EP 4 684 692 A1**
(43) Date of publication of application: **28.01.2026**
(21) Application number: 24191067.8
(22) Date of filing: 26.07.2024
(51) Int. Cl.: A47B 57/14, B65G 1/02

(54) **A STORAGE SYSTEM FOR STORING GOODS**

(71) Applicant: mact BV, 8800 Roeselare (BE)
(72) Inventor: Lefere, Tom, 8800 Roeselare (BE)
(74) Representative: Ipsilon Belgium

(57) **Abstract**

A storage system for storing goods is provided. The storage system comprises:
- at least a first post having at least first side comprising a flat zone and at least a second side inclined to the first side;
- at least a first bracing being connected to and protruding from said second side of said first post, said bracing having a front side, a back side and a top side, said front side being positioned between the back side and the plane defined by the flat zone of the first side of the first post;
- at least one good carrying means comprising at least a first surface for carrying goods and an outer side, at least one holding means provided at the outer side and oriented away from the first surface, at least one holding means being adapted to hook to the first bracing;
wherein the flat zone of the first post is in contact with the outer side of the good carrying means, the holding means contacting the first bracing at the back side and/or the top side of the first bracing.

## Description

### Field of the Invention

The present invention generally relates to storage system for storing goods, and to profiles being adapted to provide posts of such storage system for storing goods.

### Background of the Invention

Storage systems in general are known in a plurality of applications. There is a need to provide an easy mountable and adjustable storage system, allowing to use a system of posts, bracings and beams and alike, which are easily mountable and dismountable, and where the forces applied to these elements are well distributed in an optimum way.

### Summary of the Invention

According to a first aspect of the invention, a storage system for storing goods is provided. The storage system comprises:
- at least a first post having at least first side comprising a flat zone and at least a second side inclined to the first side;
- at least a first bracing being connected to and protruding from said second side of said first post, said bracing having a front side, a back side and a top side, said front side being positioned between the back side and the plane defined by the flat zone of the first side of the first post;
- at least one good carrying means comprising at least a first surface for carrying goods and an outer side, at least one holding means provided at the outer side and oriented away from the first surface, at least one holding means being adapted to hook to the first bracing;
wherein the flat zone of the first post is in contact with the outer side of the good carrying means, the holding means contacting the first bracing at the back side and/or the top side of the first bracing.

According to some embodiments, the at least one good carrying means may comprise:
- at least a first surface for carrying goods;
- at least a flange surface being angled in view of the first surface and having an outer side oriented away from the first surface;
- at least one holding means provided at the outer side and oriented away from the first surface, said holding means being adapted to hook to the first bracing.

According to some embodiments, the outer side may be a flat outer side.

In the context of this invention, a post is to be understood as a substantially vertical support, intended to support goods which are one way or another, carried by the post. A brace or bracing is to be understood as an element which is connected to a post such it protrudes from the post. It may protrude substantially perpendicularly to the post, or may be angled under another angle, different from 90°. This protrusion is a protrusion sideways from the post. Bracings being perpendicularly protruding from the post may also be referred to as horizontal bracings. Bracings under another angle may be referred to as diagonal bracings. One or more bracings and one or more posts together form an upright. Usually at least two posts and at least two bracings are connected to form an upright. These elements together are intended to form side wall of a frame or racking. Between uprights, beams may be provided to connect the two uprights one to the other, as such forming a frame.

According to some embodiments, the good carrying means may be a profile, such as an L- or U-profile. It may as well be a shelf or alike.

According to some embodiments, the first bracing may protrude sideways from the post in a direction parallel to the flat zone of the post. Posts may also be referred to as poles.

According to some embodiments, the front side, i.e. the front side of the bracing, may be a flat front side coplanar to the flat zone of the first side of the post.

According to some embodiments, the back side i.e. the back side of the bracing, may be a flat back side having its plane parallel to the flat zone of the first side of the post.

When reference is made to "flat", this is to be understood as a surface or zone having a planar surface or zone within normal tolerances applicable in the art.

The provision of such bracing or bracings, and a good carrying means being on the one hand hooked to the bracing or bracings, and on the other hand contacting its, preferably flat, outer side to the flat side of the post or posts, has the advantage that a well fixed holding of the good carrying means to the bracing may be provided.

When the good carrying means, optimally loaded with goods being carried, hangs to the bracing, the good carrying means may exercise a force to the top side of the bracing, the back side of the bracing, or a combination of both. In order to hook the good carrying means to the bracing, some play between the opening of the hook and the thickness of the bracing to be hooked over may be foreseen. The opening of the hook is equal but preferably slightly wider than the thickness of the bracing, may be up to 0.1 % or even up to 0.5% wider than the thickness of the bracing and preferably does not exceed 1 mm, may even be in the range of 0.75 mm and 0.4 mm. Once hooked over, the good carrying means exercise a force in the direction of the post to the bracing.

As the flat zone of the post is in contact with the outer side of the good carrying means, the possible rotation of the good carrying means around the bracing is limited to nihil. When only a force to the top side of the bracing is exercised, there is no moment created on the connection of the bracing to the post. Due to the small tolerances, the holding means may be free of contacting the first bracing at the back side of the first bracing.

Due to the weight or the goods or the good carrying means, a minor rotation may occur, such that a force is created at the back side of the bracing, oriented preferably at the top part of the hook, towards the side where first surface of the good carrying means carries or is to carry the goods. This is the case when the holding means contacts the first bracing at the back side of the first bracing.

At the position where the bracing is in contact with the post, a downwards force is applied to the connection due to the weight of the carried goods as well as the good carrying means itself, while at the same time a first moment is created which tends to rotate the bracing towards the side the goods are carried.

By ensuring that the flat zone of the post is in contact with the outer side of the good carrying means, the outer side of the good carrying means will exercise a force to the flat zone of the post, in order to compensate this first moment. Hence a second moment is created by a force at the flat zone of the post, cancelling the first moment. As such, net, no moment is provided to the coupling of the bracing to the post. Thus the coupling of the bracing and the post is subjected to lesser, smaller forces.

The storage system has further the advantage that the position of the at least one good carrying means may easily be changed by hooking the at least one good carrying means to another bracing at another position along the length of the post.

According to some embodiments, the flat zone may extend along the axis of the post from top to bottom of the post.

Possibly the post has a radial cross section having a polygonal circumference, being uniform along the length of the axis of the post. The polygonal circumference is preferably four-sided, such as rectangular or square, hence having four right angles, i.e. 90°, obviously plus or minus tolerances applicable in the art.
as an example, such posts may be cold or warm rolled profiles, like steel profiles or alike, or extruded profiles like polymeric, composite polymeric or metal extruded profiled, e.g. aluminum or aluminum alloy extruded profiles. Posts may be provided from wood, concrete, polymer, optionally 3D- Printed, materials such as polymers from lactic acid (poly lactic acid - PLA), ethylene terephthalate glycol (poly ethylene terephthalate glycol - PETG), thermoplastic urethane (TPU), polymers from acrylonitrile styrene acrylate (ASA), polyamide (PA), polyhydroxyalkanoates (PHA), Titanium, Stainless Steel, Inconel, acrylonitrile butastyrene polymers (ABS) , Polycarbonate (PC), polyvinylchloride (PVC), zinc, cardboard , acrylic, dibond, plexiglass, copper, zamac, sheet-metal, and alike

Possibly the at least first bracing is a similar or even identical profile as the post. Alternatively, even preferably, the post is a rigid strip of polymer, composite polymer or metal, e.g. aluminum or aluminum alloy. This strip may have two major surfaces, providing the front side and the back side of the bracing. At the two axial ends of the bracing are connected, possibly removably connected, to the second side of the post. This connection may be realized by bolting, riveting, welding and alike. However preferably a connecting element is used to connect the bracing to the post. The bracing may preferably function as a horizontal bracing.

Possibly the storage system comprises a second bracing being connected to and protruding from a third side of the first post, which third side is opposite to the second side. Also this second bracing may have a front side, a back side and a top side, for which this front side is positioned between the back side and the plane defined by the flat zone of the first side of the first post. A second holding means may be provided to the good carrying means, also at the outer side and oriented away from the first surface. This second holding means may be adapted to hook to the first bracing and contacting the second bracing at the back side and/or the top side of the second bracing. As such the outer side of the good carrying means my extend at both the second and third side of the post, while contacting the flat zone of the first post.

According to some embodiments, the at least first bracing may comprise a flat strip.

According to some embodiments, the flat strip has two major surfaces, a first of the major surfaces providing the front side of the bracing, said first of the major surfaces being parallel with the flat zone.

More preferably this first of the major surfaces is coplanar with the flat zone of the first post.

According to some embodiments, the first of the major surfaces may be in contact with the outer side of the flange surface of the good carrying means.

The holding means may be provided with a hook-shape, defined by several parts along the profiled sideview of the hook: a shank part, a bend part and a bite part ending at the point. The distance between the shank part and the bite part defines the gape of the hook. The point of the hook may be provided with a barb. The shank part may be provided to the outer side of the flange surface of the good carrying means. This shank part may extend or protrude beyond the flange surface of the good carrying means at the edge opposite to the edge where the first and flange surface meet and are connected one to the other. Possibly the shank part itself is provided, optionally partially, by the flange surface of the good carrying means. The bend part may be a part extending perpendicularly to the shank part. The gape provided is preferably substantially equal to or slightly more than the maximum distance of the front side and back side of the bracing measured in a direction perpendicular to the back side. The bite part is sufficiently long to ensure that the hooking action may take place. Possibly the bite part is sufficiently long to cause the point to extend beyond the lower point of the bracing.

When the bracing comprises a flat strip, the holding means being adapted to hook over this bracing, the gape may be substantially equal or slightly larger than the thickness of the strip, the length of the bite part being longer than the distance between the upper and lower small side of the strip. Optionally the point is provided with a barb, and the bite part is sufficiently long to cause the barb to click under the lower side of the strip. At the connection of the bite part and the bend part, the hook may be provided with a thinned zone, allowing the bite part and the bend part to articulate during hooking of the holding means over the strip, while the barb is sliding over the back side of the strip.

The opening of the hook, defined by the shank part, bend part and bite part, may be substantially equal to the cross section of the bracing. Most preferably this cross section, and hence the opening of the hook is substantially rectangular. In order to allow flexing of the bite part to the bend part, at the inside corner, a relatively minor indentation may be provided, preferably having a cross section being circular. This allows the bend part to angle out, away from the bracing, during hooking over the bracing. The depth of the indentation in view of the bite between the bend and the lowest point, or in case a barb is present, between the bend and the tip of the barb, is preferably in the range of 1/10 to 1/17, such as about 1/15.

The length of the bite between the bend and the tip of the barb is at least equal but preferably slightly larger than the dimension of the bracing in the direction of the bite. The length of the bite between the bend and the tip of the barb may be up to 0.5% or even up to 1% larger than the dimension of the bracing in the direction of the bite, but preferably does not exceed 1,5 mm, may optionally not exceed 1mm, and may even be in the range of 0.75 mm and 0.4 mm larger than the dimension of the bracing in the direction of the bite.

In case the bite is provided with a barb at the lower side of the bite, twice the radius of the point of the barb at the lowest point of the bite, is less than the width of the bite. The direction of the flank of the barb between the lowest point of the bite and the tip of the barb, and the line being parallel to the bite part, are angled over an angle preferably in the range of 15 to 35°, more preferred in the range of 20° to 30° such as about 25°. Too large angles may hinder the hooking of the hook over the bracing, in particularly when the bracing is a flat strip of material.

In order to allow flexing of the barb, at the inside corner of the barb, a relatively minor indentation may be provided, preferably having a cross section being circular. This allows the barb to angle in and out, during hooking over the bracing. The depth of the remaining material next to the indentation, away from the bite, and in view of the dimension of the bite between the bend and the tip of the barb, is preferably in the range of 1/10 to 1/17, such as about 1/15.

Hence, a storage system is provided, wherein the holding means may comprise a barbed hook, said barb is adapted to hook under the bracing when said hook is hooked on the bracing.

Preferably the good carrying means comprises more than one, e.g. at least two, such as two, three or four, substantially identical or similar holding means, all being provided to the outer side and oriented away from the first surface. The holding means are adapted to hook to the first bracing thereby contacting the bracing at the back side and/or the top side of the bracing.

According to some embodiments, the good carrying means may comprise a plurality of holding means provided at the substantially flat outer side and oriented away from the carrying surface, said holding means being adapted to hook over the top side of one of the at least one bracings.

The storage system according to the invention may have more than one post, preferably all being identical or similar. Between the two posts, the very same first bracing may connect to the two posts in the very same way, and hance may bridge the interdistance between the two posts. Hence the first bracing may connect to the second side of said second post. The good carrying means hooked to the first bracing may be dimensioned such that the flat zone of the second post is in contact with the outer side of the good carrying means. As such the two posts and the bracing may form a pair of posts connected through the bracing, and being provided with one good carrying means. Between the two posts, more than one, e.g. two, three, four or more bracings may be provided, all being similar or identical to each other, and all being connected to the two posts at both their outer ends in the same way. Some or all these bracings may be provided with a good carrying means being hooked to the bracing similar or identical as the good carrying means being hooked to the first bracing.

According to some embodiments, the system may comprise a first upright, said first upright comprises a first pair of posts, said first post being one of the two posts of this first pair of post, this first pair of posts further comprises a second post identical to the first post, the flat zone of the first side of the second post being coplanar with the flat zone of the first side of the first post, said first upright further comprises said at least a first bracing being connected to the second side of said second post, the flat zone of the second post is in contact with the outer side of the good carrying means.

According to some embodiments, the first upright further may comprise
- one or more further bracings, each being connected to and protruding from said second side of said first post, each of said further bracings having a front side, a back side and a top side, said front side being positioned between the back side and the plane defined by the flat zone of the first side of the first post;
- one or more further good carrying means comprising:
   ∘ at least a first surface for carrying goods;
   ∘ at least a flange surface being angled in view of the first surface and having an outer side oriented away from the first surface;
   ∘ at least one holding means provided at the outer side and oriented away from the first surface, said holding means being adapted to hook to a bracing ;
   wherein for some or all of the one or more further good carrying means,
   ∘ the flat zone of the first post and the flat zone of the second post are in contact with the outer side of this further good carrying means,
   ∘ the holding means this further good carrying means contacts the further bracings to which it is held at the back side and/or the top side of the further bracing.

Possibly, the number of further bracings and the number of further good carrying means are identical.

According to some embodiments, the system may comprise a second upright, said second upright comprises
- a second pair of posts identical to the pair of posts of the first upright, said second upright further comprises at least a first bracing being connected to the second sides of said first and second post of the second pair of posts,
- at least a good carrying means comprising:
   ∘ at least a first surface for carrying goods;
   ∘ at least a flange surface being angled in view of the first surface and having an outer side oriented away from the first surface;
   ∘ at least one holding means provided at the outer side and oriented away from the first surface, said holding means being adapted to hook to the first bracing of the second upright;
wherein the flat zones of the first and second post of the second pair of posts are in contact with the outer side of the good carrying means of the second upright, the holding means of the good carrying means of the second upright contacting the first bracing of the second upright at the back side and/or the top side of the first bracing of the second upright, and wherein the flat faces of the first and second posts of the first upright are parallel to the flat faces of the first and second posts of the second upright and flat faces of the first and second posts of the first upright are oriented towards the flat faces of the first and second posts of the second upright.

According to some embodiments, the first and said second upright may comprise the same number of bracings.

According to some embodiments, each bracing in the first upright may be provided at a given vertical position along the axes of the first and second post of the first upright, for each bracing in the first upright, a paring bracing is provided in the second upright at the same vertical position in view of the axes of the first and second post of the first upright.

In this case, the bracing and its paring bracing is referred to as a pair of bracings.

According to some embodiments, for each pair of bracings, the same good carrying means may be connected to both bracings, the flange surface hooked to the one of these pair of bracings is opposite to the flange surface hooked to the other of these pair of bracings.

As such the first surface of the good carrying means is provided as a shelf between two uprights, which two uprights may be part of a frame.

According to a second aspect of the invention, the storage system according to the first aspect of the invention may be used for
- frame
- warehouse
- automatic warehouse
- for organizing and/or storing of tools and/or stock at workstations and/or workplaces;
- for organizing and storing of tools and/or stock and/or transported goods in trucks
- for organizing and storing of tools and/or stock and/or transported goods in work vehicles like vans;
- for organizing and storing of tools and/or stock and/or transported goods in vehicles like trains, boats, airplanes and alike;
- as part of an autonomous mobile robot (AMR) or automated guided vehicle (AGV) ;;
- as a part of any mechanical engineering;
- as tables, such as e.g. packing tables ;
- as trolley's, load carriers or roof rack and alike;
- as industrial stairs;
- as flight-cases, cases, carriers or similar devices;
- as industrial fences, safety fences and similar fences;
- as storage systems for e.g.
   ∘ pallets and similar goods;
   ∘ crates, storage bins, containers, totes and similar goods;
   ∘ boxes, such as plastic or cardboard boxes;
   ∘ EURO NORM totes;
   ∘ flat or elongate produces like boards, plates and/or planks of wood, plastic cementitious material, insulation boards, and alike
   ∘ Drawers;
   ∘ Shelves;
   ∘ Solar boilers or PV systems;
   ∘ Supports for toolboxes such as toolbox for drills, grinding machinery, screwdrivers, powered screwdrivers, and many more;
   ∘ Bags such as laptop-bags, photo- or camera bags,
   ∘ Books, folders, paper, paperwork, paper binders, and alike;
   ∘ Storage of circular objects like wheels, tires and alike
- Wheelchair add-ons;
- Trailers;
- in- or outdoor furniture;
- Elements in fair stands and alike.

According to some embodiments, storage system may be used as a frame.

According to some embodiments, storage system may be used for organizing and/or storing of tools and/or stock at workstations and/or workplaces

According to some embodiments, storage system may be used for organizing and storing of tools and/or stock and/or transported goods in vehicles, such as trucks or vans.

According to a third, independent aspect of the invention, an elongate profile is provided, which may possible be used as a post. The elongate profile comprises an elongate volume, elongate in a longitudinal direction, said elongate profile comprising at least one channel having a void, said void having an elongate opening in said longitudinal direction at the outer surface of the elongate profile, the width (W) of the profile of the radial cross section of this void measured in a direction perpendicular to the outer surface of the elongate profile and parallel to the radial cross section, comprises
∘ a first section delimited by the opening and by a first inner flat face present in the void, the width (W1) is substantially constant and equal over its length L1 of the first section in said direction;
∘ a second section adjacent the first section, the interface of the first and second section being said first inner flat face, the width (W2) of said second section being substantially constant and equal over its length L2 of the second section, W2>W1;
∘ a third section adjacent the second section, the interface of the second and third section providing a second inner flat face, the width W3 of the thirds section at said interface of the second and third section is smaller than W2 but larger than W1.

Some elongate profiles according the third aspect of invention, optionally being an elongated profile, may comprise an elongate, longitudinal, volume, elongate in a longitudinal direction, also referred as direction of the axis. The elongate profile may have at least one side having a flat zone or surface, i.e. a zone where in a radial cross section, this flat zone or surface provides a linearly section in the perimeter of the radial cross section.

According to some embodiments, the elongated profile may comprise an outer flat surface elongate in said longitudinal direction at the outer surface of the elongate profile, said at least one channel being encompassed by said outer flat surface.

The void is adapted to receive a nut or the head of a bolt. Along this flat zone, the elongate, longitudinal, volume is provided with at least one bolt-receiving, nutreceiving, bolt-capturing or nut-capturing channel having a void with a profiled radial cross section. The void has an elongate opening in the longitudinal direction at the outer surface of the elongate profile which is adapted to receive the shaft of a nut, and allows this shaft to slide in longitudinal direction in opening, hence in the void.

The width profile of the radial cross section of this void, measurable in a direction perpendicular to the outer surface of the elongate profile, preferably at a flat zone at the outer surface of the elongate profile and parallel to the radial cross section, comprises a first section delimited by the outer flat zone and by an inner flat zone parallel to the outer flat zone. Along this first section, the width is substantially constant and equal to W1. This first section may have a length L1.

In a second section adjacent the first section, at the interface of the first and second section, the width changes abruptly from W1 to W2, W2>W1. Thereby the inner flat face in the void is provided. In this second section, the width remains substantially constant and equal to W2. This second section may have a length L2.

In a third section adjacent the second section, at the interface of the second and third section, the width changes abruptly from W2 to W3, W2>W3>W1. As such adjacent the inner flat face, a slit is provided in the void. In this third section, the width changes gradually or stepwise to 0, whereby a void is provided in which the head of a bolt can be lodged and slid.

The provision of this slit has the advantage that within this slit, a washer, provided over the shank of the bolt, may be glided. The washer will be kept in place by the slit and will contact the washer face on the side contacting the bolt head, and the inner flat face of the channel in the elongate profile.

A bolt and washer can slide into the channel, the washer being slidingly moved in the slit. When at the outer side of the elongate profile a device is connected to the bolt by a corresponding nut, the head of the bolt will be pulled to the washer contacting the head by the washer face.

The force will be transferred by the washer to the washer surface opposite the side of the washer contacting the washer face, and as such to the inner flat face of the void of the channel. As the contact surface of the washer is larger as the contact surface of head of the bolt in case no washer was present, the force is spread over a larger contact surface at the inner side of the elongate profile. The risk on damage due to this force applied to the inner flat face of the void is reduced.

When no washer were present, the head of the bolt might be pulled into the material of the elongate profile at the inner flat face. After releasing the bolt and nut again, the permanent damage in the channel created by the direct contact of the head of the bolt to the inner flat face might cause a problematic releasing and removal of the head of the bolt from the channel.

The widths W1 and W3 are usually chosen in line with the metric bolts to be maneuvered and glided in the channel. The width W1 is usually chosen in line with and equal to the standard outer diameters of metric bolts to be glided in the channels. The width W1 is usually chosen in line with and equal or slightly larger to the standard outer diameters nominal thread diameters of metric bolts to be glided in the channel. The width W3 is usually chosen in line with and equal or slightly larger than the wrench size of metric bolts to be glided in the channel.

The width W2 is usually chosen in line with the metric washers to be maneuvered and glided in the slit, more particularly the outer diameters of the metric washers, and may depend on the form of the washers to be received, varying between form A and G. Also the length L2 of the second section is usually chosen in line with the metric washers to be maneuvered and glided in the slit, more particularly the thickness of the metric washers, and may depend on the form of the washers to be received, varying between form A and G.

Appropriately chosen width W1, W2 and W3 may allow flange bolts to slide in the channel. Possibly the bolts used with this elongate profile are socket head bolts. Most preferably the dimensions of the channel are chosen to allow metric bolts, nuts and washers to be used inside the channel. Most preferably M6, M8 or M10 bolts, nuts and washers are to be used within the channel. As an example, nuts according to DIN934, DIN985 or DIN980 are used, bolts according to : DIN933, DIN912, DIN7984, DIN7500, DIN916 or DIN7985, and washers or retaining rings according to DIN125.

The width W1 is preferably in the range of 6 mm to 11 mm, such as in the ranges of 6.05 mm to 6.4 mm, e.g. about 6.2mm, 8.05 mm to 8.4 mm, e.g. about 8.2mm, or 10.05 mm to 10.4 mm, e.g. about 10.2mm.

The width W2 is preferably in the range of 12 mm to 21mm, such as in the ranges of 11.90 mm to 13 mm, e.g. about 12mm, 16 mm to 18 mm, e.g. about 17mm, or 20 mm to 22 mm, e.g. about 21mm.

The width W3 is preferably in the range of 9 mm to 20mm, such as in the ranges of 9.5 mm to 17 mm.

The second section may have a length L2 preferably in the range of 0.8mm to 2mm.

According to some embodiments, the elongate profile may be a prism volume having a top face, a bottom face and at least three side faces, said at least one channel being provided in one of the side faces.

A prism is a polyhedron with two polygonal faces lying in parallel planes and with the other faces parallelograms.

According to some embodiments, the elongate profile may have a prism volume having a top face, a bottom face and at least three rectangular side faces, said at least one channel being provided in one of the side faces.

Possibly the elongate profile comprises a plurality of identical or similar channels, at least two side faces comprise at least one channel.

Possibly the elongate profile comprises a plurality of identical or similar channels, at least two side faces comprise one channel. Possibly all side faces comprise one channel.

Possibly the elongate profile comprises a plurality of identical or similar channels, at least one side face comprises at least two channels, optionally even more than two channels.

Possibly the elongate profile comprises a plurality of identical or similar channels, at least two side faces comprise at least two channels, optionally even more than two channels.

The elongate profile may be a triangular prism comprising three rectangular side faces, one, two or three of which comprises a channel of the at least one channels. Possibly, the elongate profile may be a square prism comprising four rectangular side faces, one, two, three or four of which comprises a channel of the at least one channels. More preferred, the elongate profile is a square prism comprising four rectangular side faces, all four rectangular side faces comprise one channel according to this aspect of the invention.

Preferably one channel is provided in a face side of the prism volume, whereby this channel is centred over the width of the face side.

According to some embodiments, the elongate profile may be a square prism comprising four rectangular side faces, all four rectangular side faces comprise one channel according to the third aspect of the invention, which channel is centred over the width of the face side it is present in.

Possibly the elongate profile further comprises elongated void spaces, elongate in the elongate direction of the elongate profile.

As an example, the elongate profile may comprise a central hollow cylindrical channel, aligned, even being coinciding, with the axis of the elongate profile. The dimensions of this hollow cylindrical channel may be chosen such that a bolt with a given diameter and thread, may be screwed in this hollow cylindrical channel in direction of the axis of this hollow cylindrical channel. As such, the head of the bolt, optionally with a washer, and being screwed in the hollow cylindrical channel may fit in the at least one channel with elongate opening of a similar or identical elongate profile. In case an aperture is provided radially through the similar or identical elongate profile in which the bolt is slit in, at the axial position where the bolt is to be positioned, this bolt can be fixed by a fixing tool extending through this aperture and driving the bolt by the head of the bolt. This may e.g. be done when the bolt is a socket head bolt, and the fixing tool is adapted to cooperate with the recess present in the socket head bolt, e.g. the socket head bolt being a hexagon socket head bolt, the fixing tool being an inbus key. Optionally the elongate profile may be a rectangular or square cross sectional profile, having such central hollow cylindrical channel, further comprising additional hollow cylindrical channels, parallel to the axis of the elongate profile, near the corners of the elongate profile. The dimensions of this hollow cylindrical channel may be chosen such a bolt or a set screw with a given diameter and thread, may be screwed in this hollow cylindrical channel in direction of the axis of this hollow cylindrical channel. This bolt or set screw may be fixed by a fixing tool driving the bolt or set screw by the head of the bolt or set screw.

In case apertures are provided radially inwards the similar or identical elongate profile in which the bolt is slit in, at the axial position and at the side where the set screw or bolt is to be penetrated the side of the similar or identical elongate profile, these set screws or bolts may be sunken in these apertures while the two elongate profiles are fixed one to the other by the bolt being driven in the central hollow cylindrical channel. These bolts or set screws may hinder a mutual rotational displacement of the elongate profile being mount one to the other.

Possibly the elongate profile comprises an axis of symmetry, the elongate profile may comprise one or more hollow cylindrical channels, aligned, even being coinciding, with the axis of the elongate profile.

The elongate profile according to this aspect of the invention may be used as post and/or one or more bracings or bracing and /or one or more beams of a storage system according to the first aspect of the invention.

According to a fourth aspect of the invention, a storage system is provided comprising on or more posts, which posts are elongate profiles according to this third aspect of the invention. Such storage system may be used for any of the uses as set out for the second aspect of the invention.

According to a fifth aspect of the invention, an elongate profile according to the third aspect of the invention is used as post in a storage system according to the first aspect of the invention.

The bracing being part of the storage system according to the first aspect of the invention, may be provided at the outer end where the bracing is connected to the post, with a connecting element adapted to cooperate with a bolt slid in the channel of the post. The connecting element may be provided with an opening through which the shaft of a bolt may extend. The bolt being present in the channel and being provided with a washer, may be slid in the channel up to the position where the bracing needs to be connected. In case the washer is slightly thicker as compared to the slit it is to fit in, the bolt may be temporarily held in place while the opening in the connection element is brought over the shaft extending though elongate opening in the outer surface of the post. By screwing a nut onto the threaded shaft, the element may be connected to the post, and as such the bracing is connected to the post. Thus storage system has the advantage that the height or position of the different bracings along the post or posts may easily be changed, and consequently the position of the good carrying means.

This connection element may be a metal or polymeric connection element. Possibly the element is a corner piece, having a first wall with at a first side the location to screw the nut and a perforation of opening through the wall, and at the second opposite side either a surface to contact the outer surface of the post, or a surface to contact the outer surface of the post with one or more, e.g. two protrusions fitting in, even snugly fitting in the elongate opening . These protrusions, once inserted in the elongate opening may prevent the connection element to rotate along with the nut during screwing the nut onto the shaft. Preferably the wall, in particular its surface to contact the outer surface of the post, and the outer surface of the post is preferably flat. The corner piece has a second wall, inclined and preferably under 90° with the first wall, to which the bracing is fixed, like bolted, screwed or rivetted.

It is clear that features of one of the aspects of the present invention may be combined with one or all features of one or all of the other aspects of the invention.

When in the context of this invention, reference is made to ranges, the ranges are inclusive unless specified differently.

### Brief Description of the Drawings

Fig. 1 illustrates schematically a storage system according to the invention.
Fig. 2 illustrates schematically a detail of the storage system of figure 1.
Fig. 3 and 4a and 4b illustrate schematically a storage system according to the invention.
Fig. 5 and 6 illustrate schematically an elongate profile suitable to be used as a post of storage systems shown in figures 1 to 4.
Fig. 7a to 7c illustrate schematically a holding means for holding a good carrying means to a bracing of a storage systems shown in figures 1 to 4.
Fig. 8a to 8c illustrate schematically three stages of two elongate profiles of figure 5 and 6, connected to each other and thereby providing a part of a storage system shown in figures 1 to 4.
Fig. 9a illustrates schematically a connection element adapted to hold and connect a bracing to a post of a storage system shown in figures 1 to 4, the post being an elongate profile of figure 5 and 6. Fig. 9b to 9d illustrate schematically three stages of a connection element being connected to a bracing and to a post of a storage system shown in figures 1 to 4, the post being an elongate profile of figure 5 and 6.
Fig. 10a illustrates schematically a perspective view of a holding means for holding a good carrying means to a bracing of a storage systems, which system comprises one drawer in closed position. Fig. 10b illustrates schematically a perspective view of the holding means of figure 10a with the drawer in open position.
Fig. 11a illustrates schematically a side view of a holding means for holding a good carrying means to a bracing of a storage systems, which system comprises one drawer in closed position. Fig. 11b illustrates schematically a side view of the holding means of figure 11a with the drawer in open position.
figure 12 shows schematically example a use of a storage system according to the invention.

In the different figures, the same reference signs refer to the same or a similar feature.

### Detailed Description of Embodiment(s)

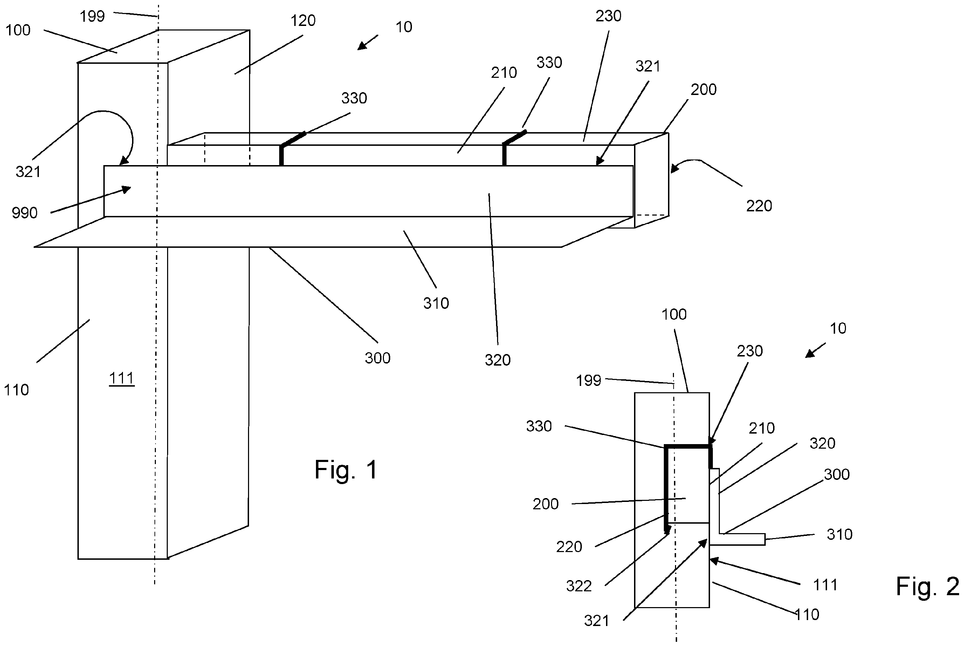

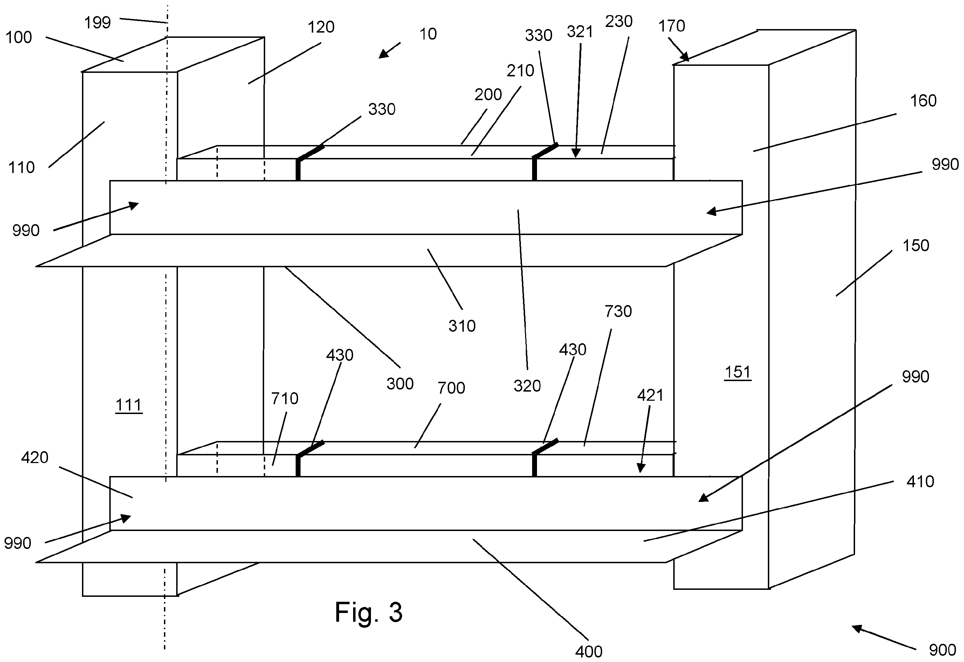

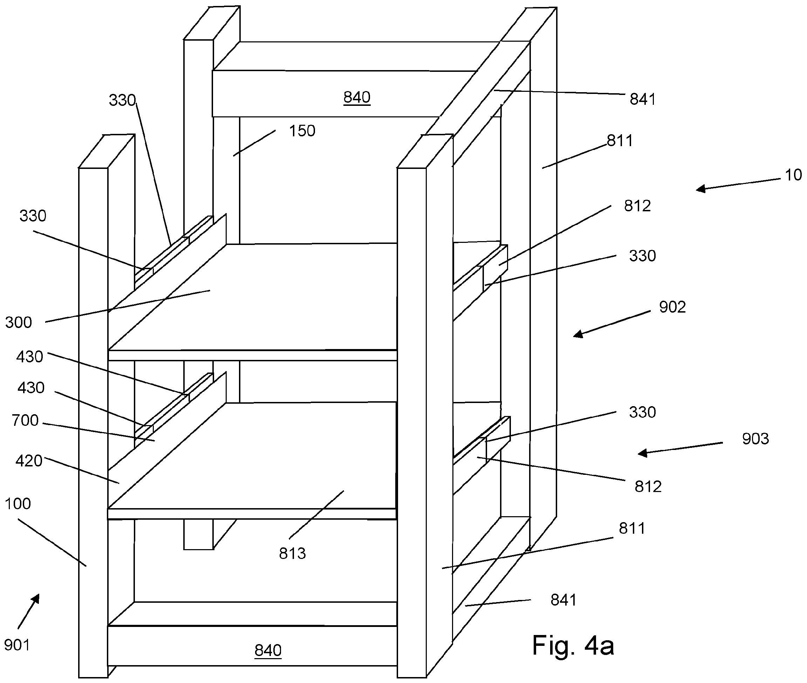

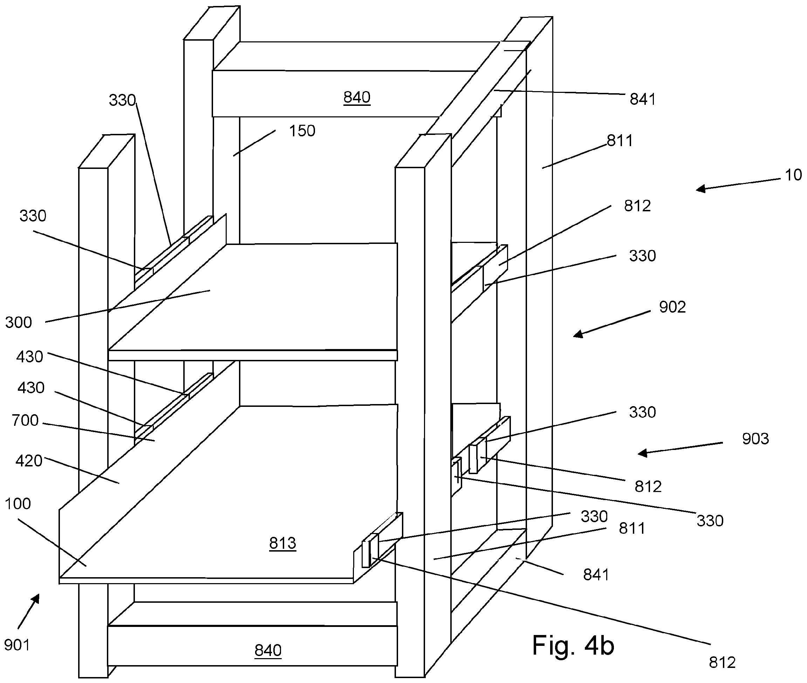

A storage system 10 for storing goods according to the present invention is shown in the figures 1 to 4. A post 100 of this storage system 10 with one bracing 200 is shown in figure 1. A combination of two such posts 100 and 150, and two substantially parallel bracings 200 and 700 together are shown in figure 3, where the for one upright 900. In figure 4, two substantially identical uprights 901 and 902 together form a shelf system 903.

The storage systems in figures 1 to 4 comprise posts 100, 150, 811. As best visible in figure 1, the post 100 has at least first side 110 comprising a flat zone 111 and at least a second side 120 inclined to the first side. In figure 1 to 4, the posts are square cross sectional posts having four substantially flat surfaces, together forming a square cuboid.

The storage systems in figures 1 to 4 comprise bracings 200, 700, 812 connected to and protruding from a post. As best visible in figure 1 and 2, the bracings have a front side 210, a back side 220 and a top side 230, and this bracing is a flat steel strip. This front side 210 is positioned between the back side 220 and the plane defined by the flat zone 111 of the first side of the post it is connected to. Preferably the front side 210 is coplanar with the plane defined by the flat zone 111 of the first side of the post. This flat zone extends along the axis 199 of the post from top to bottom of the post

The storage systems in figures 1 to 4 comprise good carrying means 300. This good carrying means 300 comprises a first surface 310 for carrying goods, an outer side 321, in this embodiment provided by a second surface 320, which two surfaces 310 and 320 together form an L-profile.

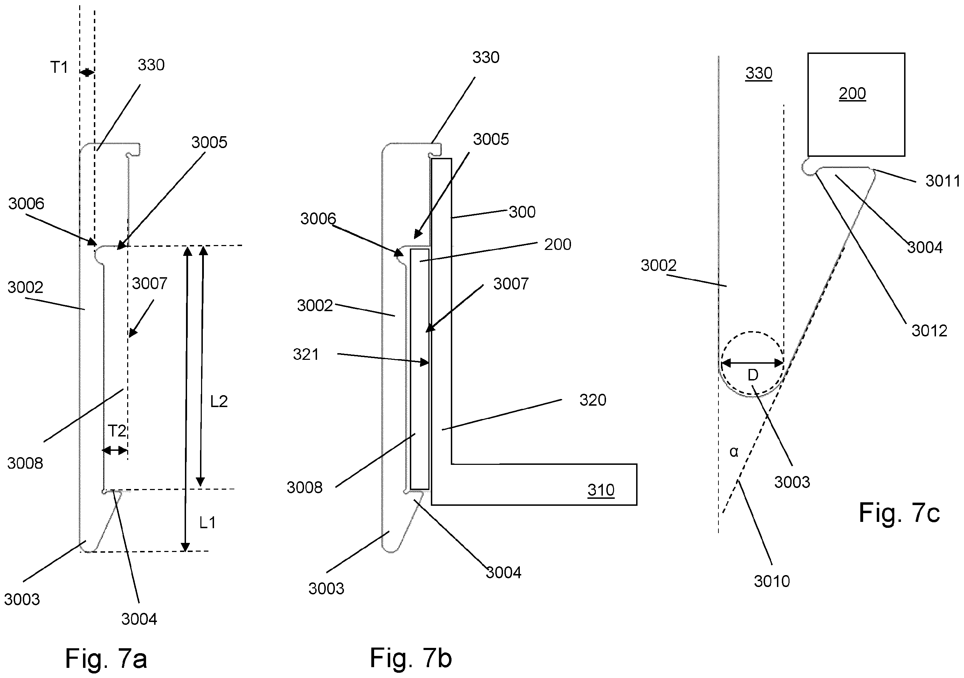

The system further comprises a plurality of holding means 330, in this embodiment having the shape of a hook as shown in figures 7a to 7c. The holding means 330 are adapted to hook to the first bracing 200. The holding means are provided at the outer side 321 of the good carrying means 300 and are oriented away from the first surface 310.

As shown best in figure 2, the flat zone 111 of the posts, like post 100, is in contact with the outer side 321 of the good carrying means 300, while the holding means 330 is contacting the bracing 200 at the back side 200, as well as in this embodiment the top side 230 of the bracing 200. In this embodiment the outer side 321 is a flat outer side. Hence a significantly large contact surface 990 between the flat zone 111 of the posts, like post 100, and the outer side 321 of the good carrying means 300 is provided.

When a load is provided to the good carrying means 300, the vertical force will be transferred to the bracing by the holding means 330, and carried by the bracing 200. As the vertical force acts at one side of the good holding means, a moment will be applied to the bracing, tending to rotate the bracing towards the side the load is acting upon the good carrying means. As the flat zone 111 of the posts, like post 100, is in contact with the outer side 321 of the good carrying means 300, this moment will be compensated by a counter moment applied by the flat zone 111 of the post to the outer side 321 of the good carrying means 300 over the contact surface 990. As such the connection between the bracing and the post will not have to compensate the moment itself, and can be carried out less robust.

Figure 3 shows a storage system comprising a first upright 900, which first upright 900 comprises a first pair of posts 100, 150. The second post 150 is identical to the first post 100, also has a flat zone 151 at a first side 160 of the second post 150. This flat zone 151 is coplanar with the flat zone 111 of the first side 110 of the first post 100. The bracing 200 is connected to the second side 170 of the second post 150. Hence the bracing 200 is at both outer ends connected to one of the posts. At both outer ends, the flat zones 111 and 151 of the two posts 100 and 150 are in contact with the - flat - outer side 321 of the good carrying means 300.

As shown in figure 3, there is a second bracing 700, identical to the first bracing 200, and being parallel tot his first bracing 200, which is installed in an identical way between the posts 100 and 150. This second bracing 700 also has a front side 710, a back side 720 and a top side 730. There are a plurality of good carrying means 400 having a first surface 410 for carrying the goods, in this embodiment a flange surface 420 together forming an L-profile with the first surface 410, which flange surface has an outer side 421 oriented away from the first surface 410. Holding means 430 are provided at the outer side 421 and oriented away from the first surface 410, which holding means are adapted to hook to a bracing 700.

The flat zone 111 of the first post 100 and the flat zone 151 of the second post 150 are both in contact with the outer side 421 of this good carrying means 400, as well as the corresponding outer side 321 of this good carrying means 200, and the holding means 430 of this good carrying means also contacts the further bracings to which it is held at the back side 720 and the top side 730 of the further bracing 700.

Figure 4a and 4b each show a storage system comprising two upright 901 and 902. The two upright 901 and 902 are identical while the surfaces for holing goods of each of the goods carrying means 813 and 300 are oriented towards each other. The second upright comprises also a pair of posts 811 and a set of bracings 812. Between the two uprights, one or more beams 840 or additional horizontal bracings 841 may be present to reinforce the storage structure. In this embodiment, the good carrying means are provided as shelves 850. Then these shelves are replaced by L-profiles at each upright, this storage system can be used to carry e.g. toolboxes, whose sides can be carried by the L-profiles providing the first surfaces of the goods carrying means.

Turning to the holding means 330 and 430, these holding means are provided as hooks being attached to and part of the good carrying means 300 and 400. A cross section of these holding means 330 is shown in figure 7a to 7c. The holding means 430 is identical to this holding means 330.

These hook-like holding means 330 and 430 are barbed hooks 322, adapted to hook over this bracing 200 or 700, in this embodiment, strip-like bracings. The gape 3001 may be substantially equal or slightly larger than the thickness of the strip. The length L1 of the bite part 3002 is longer than the distance between the upper and lower small side of the strip. The point 3003 is provided with a barb 3004, and the bite part is sufficiently long to cause the barb to click under the lower side of the strip. At the connection of the bite part 3002 and the bend part 3005, the hook may be provided with a thinned zone or indentation 3006, allowing the bite part and the bend part to articulate during hooking of the holding means over the strip, while the barb is sliding over the back side of the strip. The indentation 3006 allows the bend part to angle out, away from the bracing, during hooking over the bracing. The remaining thickness T1 of the bite part at the indentation in view of the length L2 between the bend and the tip of the barb, is preferably about 1/15.

The substantially rectangular opening 3008 of the hook, defined by the shank part 3007, which is in this embodiment provided by outer side 321 of the good carrying means 300, bend part 3005 and bite part 3001, is substantially equal to the cross section of the bracing 200.

The length L2 of the bite between the bend and the tip of the barb is about 0.5 mm larger than the dimension of the bracing in the direction of the bite. this height of the bracing is 40mm. The depth T2 of the bite is about 0.05 mm larger than the width of the bracing, being 4mm.

In this embodiment, the bite is provided with a barb 3004 at the lower side of the bite. The diameter D of the point 3003 of the barb at the lowest point of the bite, is less than the width T1 of the bite. The direction of the flank of the barb between the lowest point of the bite and the tip of the barb (represented by line 3010) and the line being parallel to the bite part, are angled over an angle α of about 25°. The barb preferably does not extend beyond the thickness of the bracing. The top 3011 of the barb preferably contacts or is positioned under the lower side of the bracing.

In order to allow flexing of the barb, at the inside corner of the barb, a relatively minor indentation 3012 is provided. The hook may preferably be provided, in general, from polymeric material.

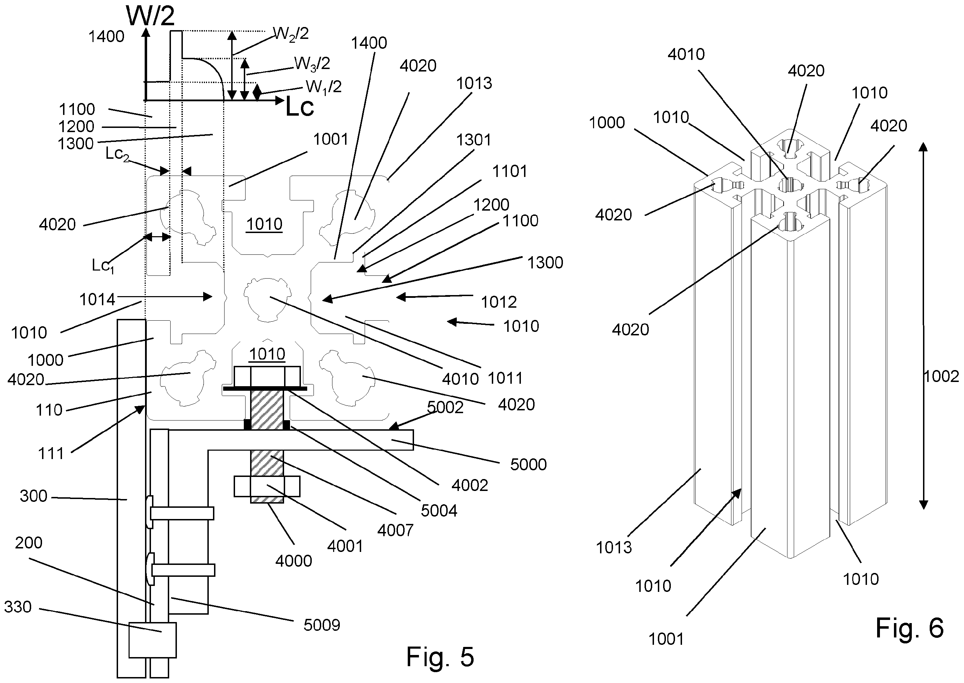

Turning to the posts 10 of the storage systems of some embodiments of the present invention, these posts may be provided as elongate profile 1000 as show in figures 5 and 6. The elongate profile 1000 comprises an elongate, rectangular cuboid volume 1001 and is elongate in a longitudinal direction 1002. The perimeter of the volume has four substantially flat, identical outer surfaces. The elongate profile comprises in each flat outer surface an open channel 1010 having a void 1011, which void has an elongate opening 1012 in the longitudinal direction at the outer surface 1013 of the elongate profile. The width W of the perimeter 1400 of the radial cross section of this void measured in a direction 1014 perpendicular to the outer surface of the post and parallel to the radial cross section varies along the depth of the void.

In a first a first section 1100 delimited by the opening 1012 and by a first inner flat face 1101 present in the void, the width W1 is substantially constant and equal over its length Lc1 of the first section in said direction. As shown in figure 5, this section is to encompass the optionally threaded shaft of a bolt 4000.

In a second, adjacent section 1200, the interface of the first and second section being said first inner flat face 1101, the width W2 of this second section is substantially constant and equal over its length Lc2 of the second section, whereas W2>W1.

In a third section1300, adjacent the second section, the interface of the second and third section providing a second inner flat face 1301, the width W3 of the third section at said interface of the second and third section is smaller than W2 but larger than W1. The width W3 may stay constant over a given length in depth direction of the void, and may thereafter gradually or stepwise decrease to 0, thereby providing the ceiling of the void.

As an example, the volume has a square cross section with a width of its four sides of about 45mm. it is provided from extruded aluminium. In the middle of each side, a channel is provided. The width W1 is about 8.2mm, the depth Lc1 being 4.5mm. in the second section, the width W2 is 17mm, and the depth Lc2 of this section is 2.1mm. The width W3 of the third section at the interface of the second and third section is 13.2mm, stays this value over a depth of about 5mm, after which it gradually decreases to a width 0. Such channel is adapted to receive a bolt M8 (4000) and a washer M8 (4002). The bolts head 4004 is to be located in the third section, the washer 4002 in the second section.

In the elongate profile 1000, a central void channel 4010 is provided, which is coinciding with the axis of the elongate profile. The shape and dimensions of this hollow cylindrical channel 4010 is chosen such that a bolt 4000 can be screwed in this hollow cylindrical channel in direction of the axis of this hollow cylindrical channel.

In case an aperture 4101 is provided radially through a first elongate profile 4101, e.g. by drilling in this aperture 4101, in which the bolt 4000 is slid in, at the axial position where the bolt is to be positioned, this bolt can be fixed by a fixing tool extending through this aperture 4101 and driving the bolt 4000 by the head of the bolt into the central void channel 4010 of an identical elongate profile being at right angles in view of this first elongate profile. Preferably a socket head bolt is used. The central void channel 4010 is provided with such cross section that the bolt is self-tapering when driven in the central void channel 4010. As such two elongate profiles may be connected to each other in a simple way by using bolts only.

The elongate profiles further comprises hollow cylindrical channels 4020, parallel to the axis of the elongate profile, near the corners of the elongate profiles. The dimensions of these hollow cylindrical channel 4020 are chosen such that a set screw 4021 with a given diameter and thread, can be screwed in this hollow cylindrical channel in direction of the axis of this hollow cylindrical channel. The channels 4020 are provided with such cross section that the set screw is self-tapering when driven in the channels 4020 . When in the elongate profile to be connected, at the correct locations, apertures 4022 are provided towards these hollow cylindrical channels 4020, e.g. by drilling in apertures, the set screws at the outer end of the profile to be connected, may fit into these apertures 4022. As these apertures are offset the central axis of the elongate profile in which the bolt is driven, these set screws will avoid mutual rotation of the two elongate profiles.

Alternatively the set screws are partially driven in the apertures 4022 of the first elongate profile, prior to bolting the two elongate profiles to each other, thereby providing the same effect. Optionally, by positioning the set screws not in apertures in the first elongate profile, but in the open channel in which the bolt is slid, the two profiles may be rotated one to the other over an angle of 90°.

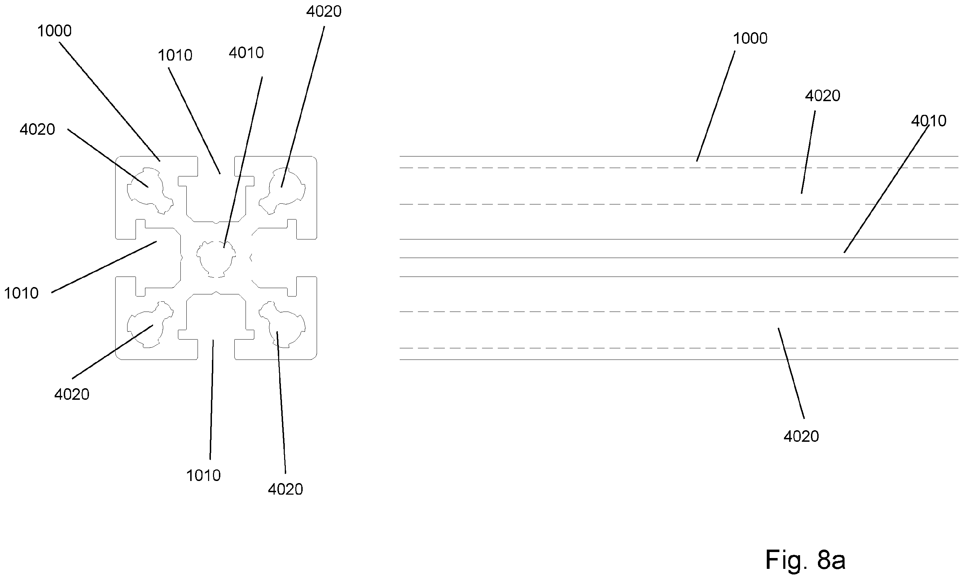

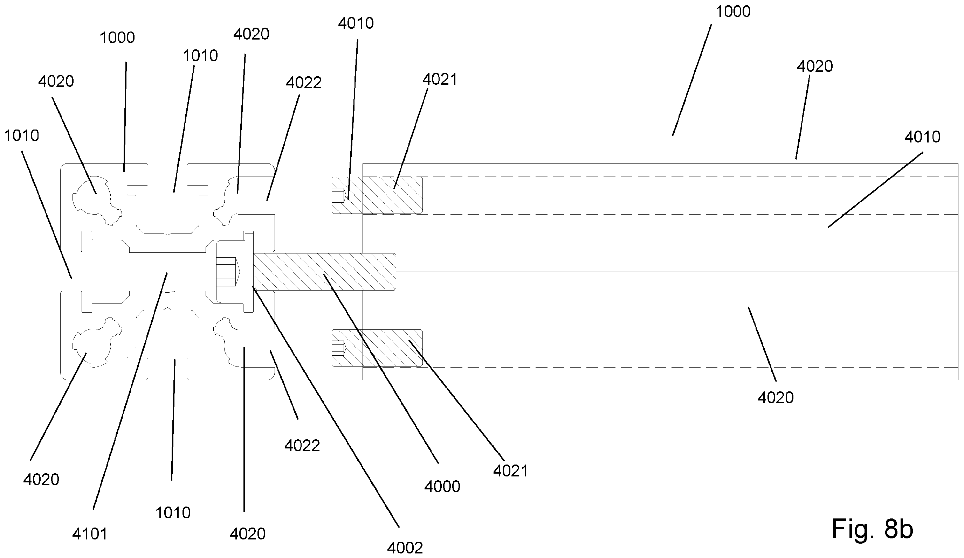

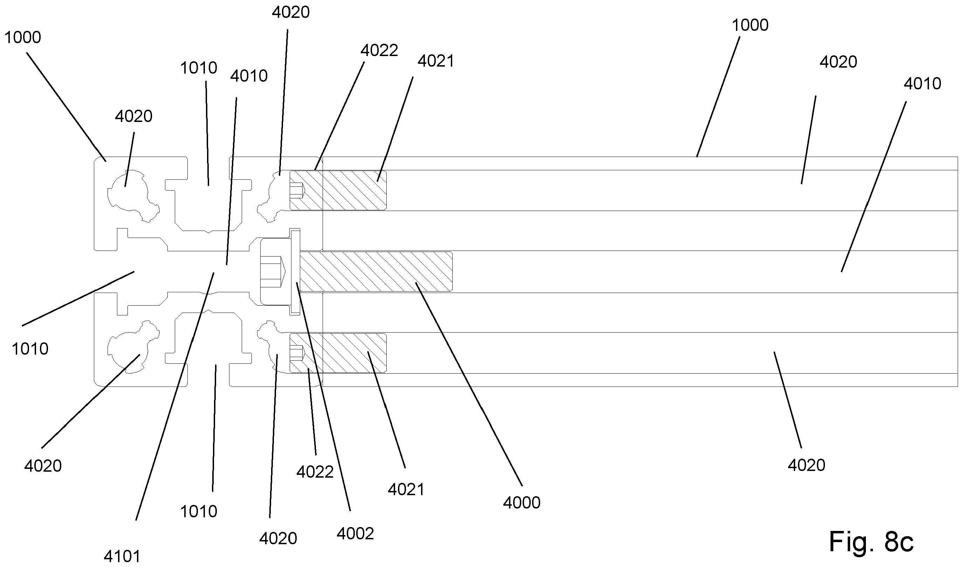

The posts 100, 150, 811 and the one or more beams 840 or additional horizontal bracings 841 may be provided by such elongate elements, and may be connected to each other as described in relation to figures 8a to 8c.

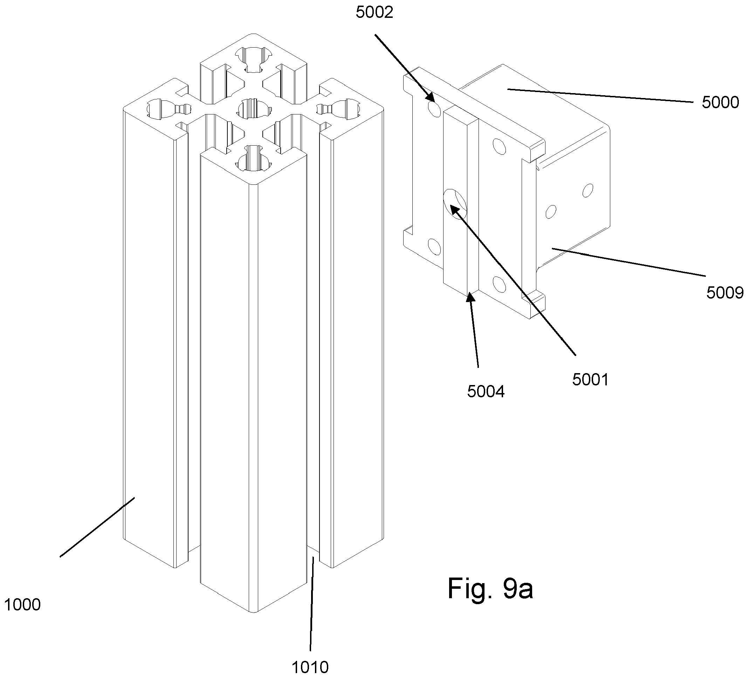

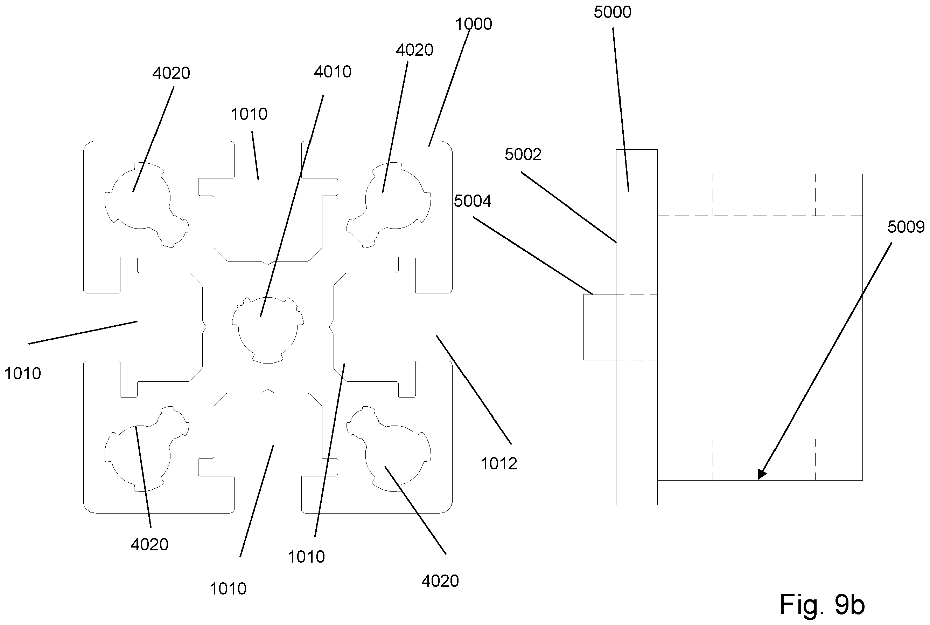

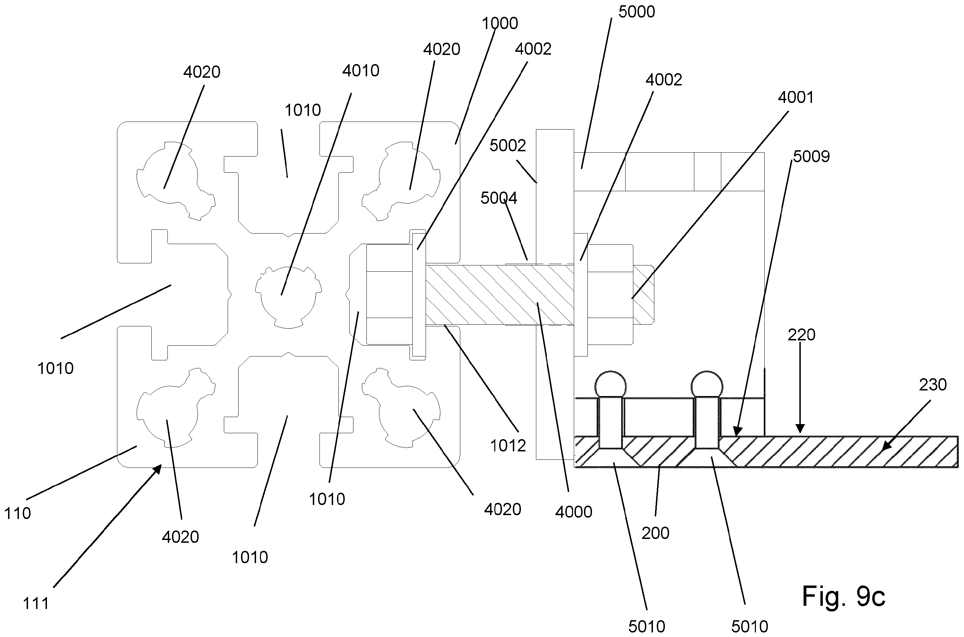

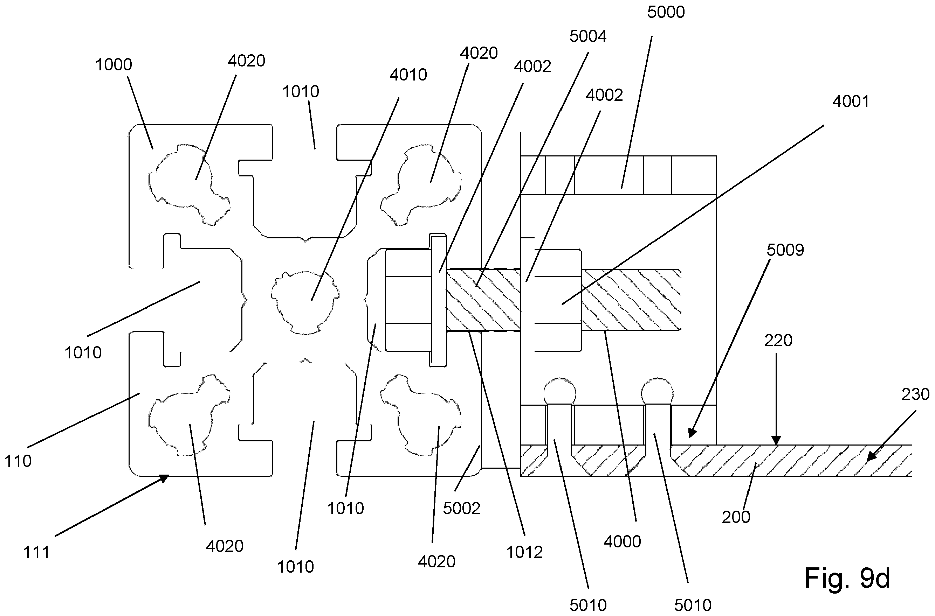

In order to connect the bracing 200 to a post 10, provided as an elongate element 1000, as shown in figure 5 and figures 9a to 9d, a connecting element 5000 adapted to cooperate with a bolt 4000 slid in the open channel 1010 of the post 10 is provided. The connecting element 5000 may be provided with an opening 5001 through which the shaft 4007 of a bolt 4000 extends. To the bolt 4000 provided with a washer 4002 a nut 4001 is screwed onto the threaded shaft 4007. The connecting element 5000 becomes connected to the post 10. The connecting element 5000 is provided with a connecting side 5002 which is to contact the surface of the post 10. On this connecting side 5002, a protrusion 5004 is provided, which is aligned and fits snugly in the opening 1012 of the open void. When the nut 4001 is screwed to the bolt, this protrusion is pushed between the walls of the opening 1012 and the shaft 4007 of the bolt 4000. As such the connection element may become fixed and rotation of the connecting element 5000 along with the nut is avoided.

Perpendicularly to the connecting side 5002, other sides are provided to the connecting element 5000. One side 5009 is adapted to be fixed, e.g. rivetted, to the bracing 200. In this embodiment, as an example, two rivets 5010 are used, although other fixing means, like screws welds and alike may be used. The first side 110, comprising a flat zone 111 and may constitute the flat zone of the first side of a first post. The first side 110 may be used to be in contact with the outer side of the good carrying means (not shown in these figures for clarity reasons). The holding means may be hung and clicked, hence be in contact with the first bracing 200 at the back side 220 and the top side 230 of the first bracing 200.

This connection element may be a metal, such as aluminum, or polymeric connection element.

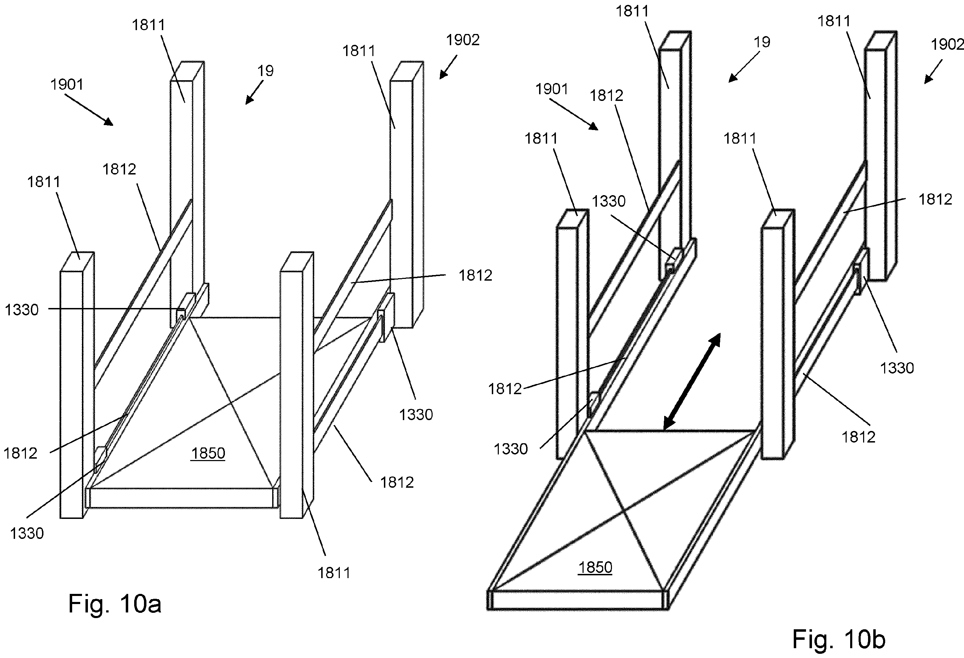

Turning to figures 10a and 10b, an alternative storage system 19 is shown, comprising two upright 1901 and 1902. The two uprights 1901 and 1902 are identical while the surfaces for holing goods of the goods carrying means 1300 are oriented towards each other. Both uprights comprise a pair of posts 1811 and a set of bracings 1812. The goods carrying means is connected to two parallel and coplanar bracings, one of each upright, by means of holding means 1330, being similar or identical to the ones shown in figures 7.

In this embodiment, the good carrying means is provided as a drawer 1850. As showing figures 10a and 10b, the drawer can be moved in and out of the storage system by pulling the drawer 1850 in a direction parallel to the bracings. Appropriate rails for guiding the movement of the drawer are provided in connection with the good carrying means.

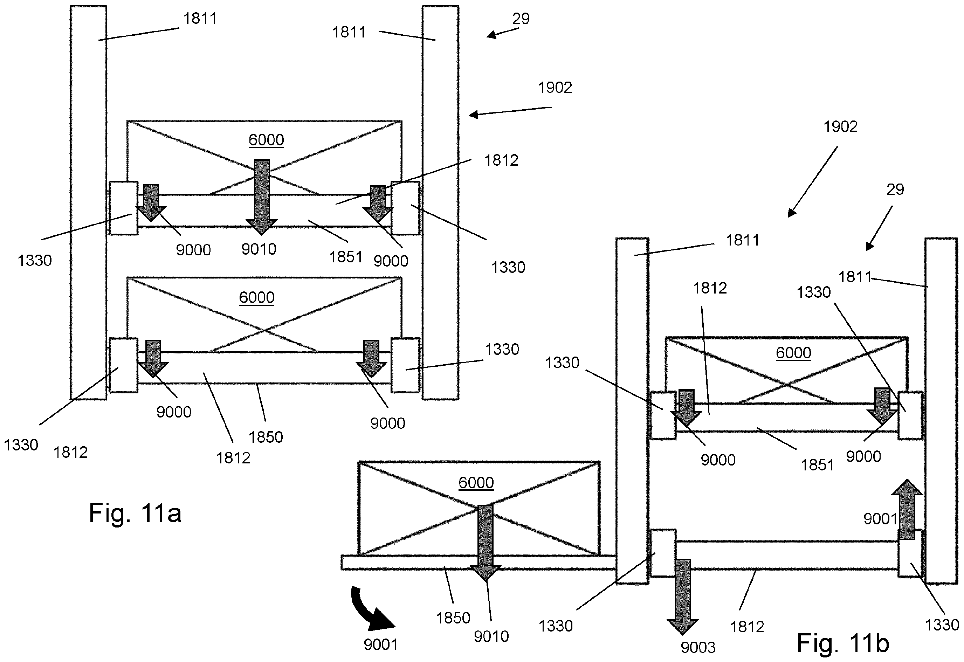

In figures 11a and 11b, a side view of a possible use of an alternative storage system 29, substantially identical to the storage system 19, but equipped with two parallel drawers 1850 and 1851 is provided. Each drawer can be moved in and out of the storage system by pulling the drawer in a direction parallel to the bracings. Each drawer is hung on a pair of bracings, one of each upright. Appropriate rails for guiding the movement of the drawer are provided in connection with the good carrying means. Again the holding means 1330 may be identical or similar to the ones shown in figures 7. In these figures 11a and 11b, it is shown that the forces and the moments caused by the load 6000 in and of the drawers, either opened or closed, is taken by the good carrying means, and transferred as forces acting upon the bracings. In the example the loads may be toolboxes or alike, one loaded in each of the drawers.

When the drawers are in closed position (figure 11a) the forces caused by the loads 6000 act upon the holding means 1330 substantially vertically downwards and substantially equally spread over the number of holding means 1330 used for each drawer 1850 or 1851. The holding means 1330 will compensate this load and receive substantially vertical forces 9000.

When a drawer, e.g. drawer 1850, is in opened position (figure 11b) the substantially vertically force 9010 caused by the drawer will be compensated to a large extent by a substantially equal force 9003 in the holding means 1330 closest to the post from where the drawer is drawn out. The moment 9001 created by the load 6000 hanging outside the storage system, and acting on the rotation point close to or at the holding means 1330 closest to the post from where the drawer is drawn out, will be taken by the holding means 1330 most far remote from the post from where the drawer is drawn out. As the holding means 1330 are hooked to the bracing, this causes the necessary forces to be transferred to the bracing as an upwards pulling force 9002.

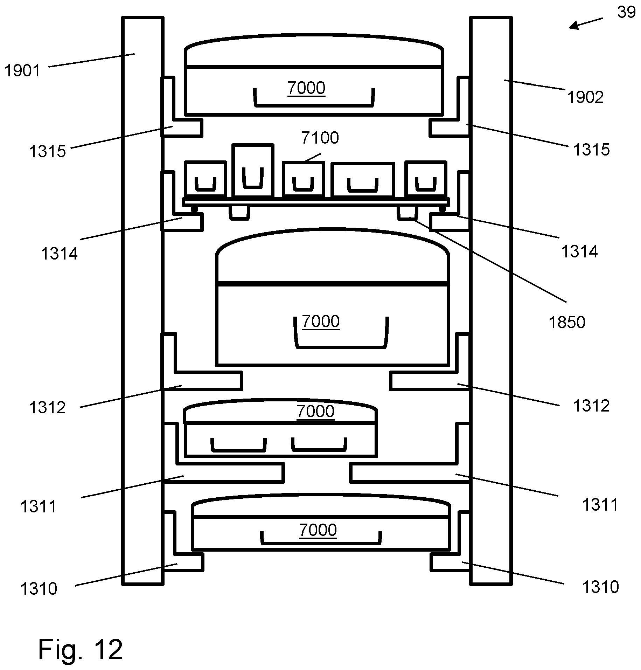

A front view of a possible use of an alternative storage system 39 is shown in figure 12, substantially identical to the storage systems 19 and 29, but equipped with a plurality of, in this case five, pairs of mutually parallel good carrying means 1310, 1311, 1312, 1313 and 1314. Similar as in figures 4a and 4b, the storage system 39 comprises two uprights 1901 and 1902, each comprising two posts 1811. The goods carrying means 1300 are connected to two parallel and coplanar bracings, one of each upright, by means of holding means 1330, possibly being similar or identical to the ones shown in figures 7.

As can be noticed, the function of the good carrying means 1310, 1311, 1312, 1313 and 1314 are not identical. The good carrying means 1310, 1311 1312 and 1314 are to carry toolboxes. The two parallel, cooperating good carrying means have each a side for carrying goods 3100, which are the horizontal parts of an L shaped profile. The outer ends of the two cooperating good carrying means are spaced such the lower surface of the toolbox 7000 to be carried, will be in contact with both of the sides 3100 when the toolbox 7000 is inserted in the storage system 39. The vertical position of the pairs of cooperating good carrying means are set such that the height of the storage system 39 can be occupied most economically. In this example, one good carrying means 1313 is provided as a drawer 1850, similar to the drawers shown in figures 10 and 11. The drawer may carry one or a plurality of good containers or totes 7100, e.g. positioned in matrix position on the surface of the drawer. Also here, the vertical position of the cooperating good carrying means 1313 are set such that the height of the storage system 39 can be occupied most economically.

This storage system may be used as a storage system for organizing and/or storing of tools and/or stock at workstations and/or workplaces; in trucks, in work vehicles like vans; in vehicles like trains, boats, airplanes and alike; or as storage systems for at work posts. The functionality and the position of the cooperating good carrying means can be changed swiftly and easily, without the need of dismantling the whole storage system.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A storage system (10) for storing goods, said storage system comprises:
- at least a first post (100) having at least first side (110) comprising a flat zone (111) and at least a second side (120) inclined to the first side;
- at least a first bracing (200) being connected to and protruding from said second side (120) of said first post, said bracing having a front side (210), a back side (220) and a top side (230), said front side being positioned between the back side and the plane defined by the flat zone (111) of the first side of the first post;
- at least one good carrying means (300) comprising at least a first surface (310) for carrying goods and an outer side (321), at least one holding means (330) provided at the outer side (321) and oriented away from the first surface (310), at least one holding means (330) being adapted to hook to the first bracing (200)
wherein the flat zone (111) of the first post (100) is in contact with the outer side (321) of the good carrying means (300), the holding means (330) contacting the first bracing (200) at the back side (220) and/or the top side (230) of the first bracing (200).

2. A storage system according to claim 1, wherein the at least one good carrying means (300) comprises
∘ at least a first surface (310) for carrying goods;
∘ at least a flange surface (320) being angled in view of the first surface and having an outer side (321) oriented away from the first surface (310);
∘ at least one holding means (330) provided at the outer side (321) and oriented away from the first surface (310), said holding means being adapted to hook to the first bracing (200).

3. A storage system according to any one of the preceding claims, wherein the outer side is a flat outer side.

4. A storage system according to any one of the preceding claims, wherein said front side is a flat front side coplanar to the flat zone of the first side of the post.

5. A storage system according to claim 4, wherein said back side is a flat back side having its plane parallel to the flat zone of the first side of the post.

6. A storage system according to any one of the preceding claims, wherein said at least first bracing comprises a flat strip.

7. A storage system according to claim 6, wherein the flat strip has two major surfaces, a first of the major surfaces providing the front side of the bracing, said first of the major surfaces being parallel with the flat zone.

8. A storage system according to claim 7, wherein the said first of the major surfaces is in contact with the outer side of the flange surface of the good carrying means.

9. A storage system according to any one of the preceding claims, wherein said holding means comprises a barbed hook (322), said barb is adapted to hook under the bracing when said hook is hooked on the bracing.

10. A storage system according to any one of the preceding claims, wherein said good carrying means comprising a plurality of holding means provided at the substantially flat outer side and oriented away from the carrying surface, said holding means being adapted to hook over the top side of one of the at least one bracings.

11. A storage system for storing goods according to any one of the preceding claims, wherein said system comprising a first upright (800), said first upright comprises a first pair of posts (100, 150), said first post (100) being one of the two posts of this first pair of post, this first pair of posts further comprises a second post (150) identical to the first post, the flat zone (151) of the first side (160) of the second post (150) being coplanar with the flat zone (111) of the first side (110) of the first post (100), said first upright (800) further comprises said at least a first bracing (200) being connected to the second side (170) of said second post (150), the flat zone (151) of the second post (150) is in contact with the outer side (321) of the good carrying means (300).

12. A storage system for storing goods according to claim 11, said system comprises a second upright (800), said second upright (810) comprises
- a second pair of posts (811) identical to the pair of posts of the first upright, said second upright further comprises at least a first bracing (812) being connected to the second sides of said first and second post of the second pair of posts,
- at least a good carrying means (813) comprising:
∘ at least a first surface for carrying goods;
∘ at least a flange surface being angled in view of the first surface and having an outer side oriented away from the first surface;
∘ at least one holding means provided at the outer side and oriented away from the first surface, said holding means being adapted to hook to the first bracing of the second upright;
wherein the flat zones of the first and second post of the second pair of posts are in contact with the outer side of the good carrying means of the second upright, the holding means of the good carrying means of the second upright contacting the first bracing of the second upright at the back side and/or the top side of the first bracing of the second upright, and wherein the flat faces of the first and second posts of the first upright are parallel to the flat faces of the first and second posts of the second upright and flat faces of the first and second posts of the first upright are oriented towards the flat faces of the first and second posts of the second upright.

13. A storage system for storing goods according to claim 12, wherein said first and said second upright comprise the same number of bracings.

14. The use of a storage system according to any one of the preceding claims, as a frame.

15. The use of a storage system according to any one of the preceding claims for organizing and/or storing of tools and/or stock at workstations and/or workplaces

16. The use of a storage system according to any one of the preceding claims for organizing and storing of tools and/or stock and/or transported goods in vehicles, such as trucks or vans.
